# FASCICULE DE BREVET EUROPEEN

(11) **EP 1 328 051 B1**
(45) Date de publication et mention de la délivrance du brevet: **07.03.2012**
(21) Numéro de dépôt: 02354182.4
(22) Date de dépôt: 25.11.2002
(51) Int. Cl.: H02B 1/052

(54) **Dispositif de fixation d'un appareil électrique sur un rail de montage**
Vorrichtung zur Schienenbefestigung eines elektrischen Installationsgerätes
Device for mounting an electrical apparatus on a rail

(30) Priorité: 14.01.2002 FR 0200376
(43) Date de publication de la demande: 16.07.2003
(73) Titulaire: Schneider Electric Industries SAS, 92500 Rueil-Malmaison (FR)
(72) Inventeur: Vanzetto, Daniel, c/o Schneider Electric Ind. SAS, 38050 Grenoble Cédex 09 (FR)
(74) Mandataire: Tripodi, Paul

(56) Documents cités:
- DE-A- 19 709 811
- DE-A- 19 724 945

## Description

La présente invention concerne un dispositif de fixation amovible d'un appareil électrique sur un rail de montage, ledit appareil étant logé dans un boîtier comportant une face arrière de fixation au rail, une face avant opposée à la précédente, deux faces principales et deux faces latérales comportant des bornes de raccordement, ledit dispositif comprenant un verrou comprenant un coulisseau monté mobile par rapport au boîtier de l'appareil entre une première position dite de verrouillage dans laquelle le coulisseau est engagé avec le rail de manière à assurer la fixation amovible de l'appareil sur le rail et une seconde position, dite de déverrouillage, dans laquelle le verrou est désengagé du rail de manière à autoriser le retrait de l'appareil, ledit coulisseau comprenant une partie d'engagement avec le rail, une partie de manoeuvre et des moyens élastiques pour le maintien dudit coulisseau dans la première position précitée, lesdits moyens élastiques autorisant le déplacement du coulisseau vers la seconde position sous l'actionnement de la partie de manoeuvre.

Le document EP0666626 décrit un appareil électrique destiné à être fixé au côté d'autres appareils du même type sur un rail de montage au moyen d'un dispositif de fixation du genre précédemment mentionné. Dans ce document, le verrou est monté coulissant par rapport au boîtier de l'appareil parallèlement au plan de fixation de l'appareil sur le rail, au voisinage de la face arrière de l'appareil. Lorsqu'il est nécessaire de démonter un appareil particulier, les autres restant en place, l'opérateur, en se plaçant en regard de la face latérale de l'appareil à partir de laquelle le verrou est accessible, exerce une traction sur le verrou au moyen d'un outil approprié de manière à dégager le verrou du rail de fixation. Or, les bornes de raccordement des appareils situées sur ladite face latérale, entre la face avant et le verrou, nécessitent souvent d'être raccordées à un peigne de raccordement. La présence de ce peigne de raccordement rend difficile l'actionnement du verrou dans le but de retirer un appareil du rail.

Les documents DE 197 24 945 et DE 197 09 809 décrivent des appareils dans lesquels les organes de manoeuvre des verrous ont été rendus accessibles à partir de la face avant des appareils de sorte qu'il est aisé d'actionner le verrou même lorsqu'un peigne de raccordement est raccordé aux bornes.

Or, le dispositif de fixation décrit dans le document DE19709809 ne permet pas un démontage facile sans outil d'un appareil, lorsqu'un peigne est en place, puisqu'il nécessite l'utilisation d'un tournevis. Le document DE 197 24 945 quant à lui, décrit un dispositif présentant une structure relativement compliquée, car il est constitué d'un verrou et d'une tige d'actionnement formant deux pièces distinctes nécessitant d'être mécaniquement reliées pendant le montage de l'appareil.

La présente invention résout ces problèmes et propose un dispositif de fixation d'un appareil électrique sur un rail de montage, de conception simple, et permettant un démontage aisé sans outil d'un appareil lorsqu'un peigne est en place.

A cet effet, la présente invention a pour objet un dispositif de fixation du genre précédemment mentionné, ce dispositif étant caractérisé en ce que le coulisseau précité est monté coulissant par rapport au boîtier de l'appareil, suivant une trajectoire arquée entre les deux positions précitées et comporte une première extrémité coopérant avec le rail et une seconde extrémité comportant la partie de manoeuvre précitée, ladite partie de manoeuvre étant ramenée au voisinage de la face avant de l'appareil de manière à permettre le raccordement des bornes de l'appareil à un peigne de raccordement.

Suivant une réalisation particulière, le boîtier de l'appareil comporte au moins une rainure de forme arquée apte à coopérer avec au moins un ergot prévu sur le coulisseau.

Suivant une caractéristique particulière, les deux faces principales du boîtier comprennent respectivement deux dégagements de matière et les rainures précitées sont prévues à l'intérieur de ces dégagements de matière.

L'invention concerne également un appareil électrique équipé d'un dispositif de fixation comportant les caractéristiques précédentes prises seules ou en combinaison.

L'invention a également pour objet un appareil électrique comprenant une face arrière de fixation à un rail, une face avant comportant des organes de manoeuvre de l'appareil, deux faces principales et deux faces latérales comportant des bornes de raccordement, cet appareil étant logé dans un boîtier comportant des moyens aptes à permettre le coulissement suivant une trajectoire arquée d'un verrou de forme arquée monté sur ledit boîtier.

Avantageusement, ce boîtier comporte, sur chacune de ses deux faces principales, deux rainures de forme arquée de même rayon de courbure et disposées respectivement au voisinage de la face avant et au voisinage de la face arrière de l'appareil.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective, illustrant un appareil de protection électrique équipé d'un dispositif de fixation selon l'invention, et raccordé à un peigne de raccordement,
- La figure 2 est une vue de face de la précédente,
- Les figure 3 et 4 sont des vues de côté dudit appareil équipé du dispositif, respectivement dans une position verrouillée et une position déverrouillée du verrou,
- La figure 5 est une vue en perspective de l'appareil seul, et
- La figure 6 est une vue en perspective du verrou seul selon une variante mettant en oeuvre un ressort intégré.

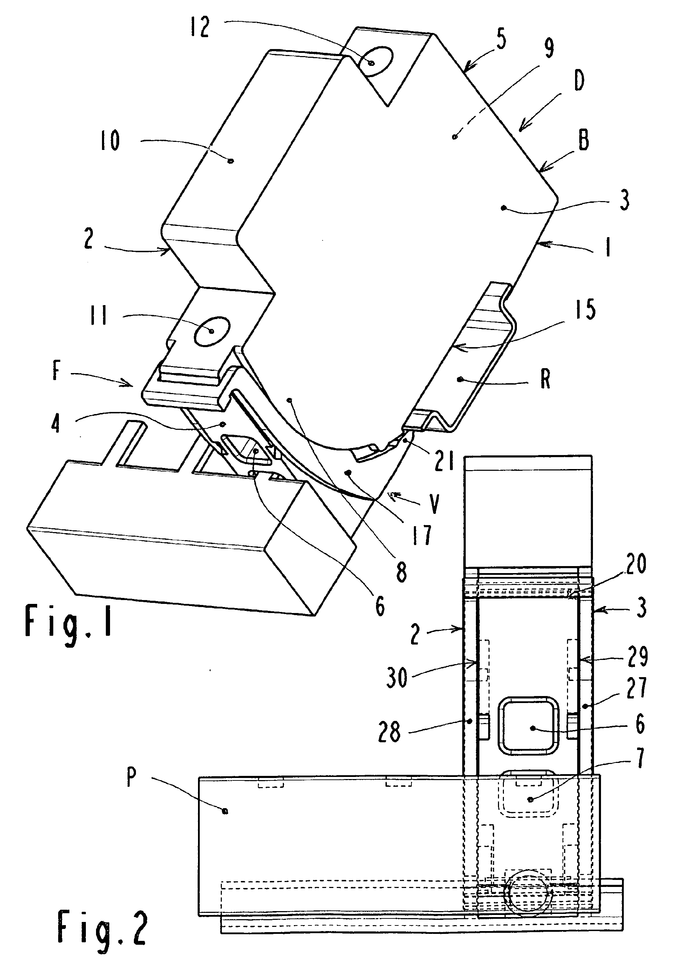

Sur les figures 1 à 5, on voit un appareil électrique D en l'occurrence un disjoncteur, logé dans un boîtier modulaire B et destiné à être fixé sur un rail de montage R, tel qu'illustré sur les figures 1 à 4, au côté d'autres appareils du même type (non représentés).

Le boîtier modulaire de l'appareil comprend une face arrière 1 de fixation au rail de montage R, deux faces principales 2,3 par lesquelles plusieurs appareils du même type peuvent être accolés deux à deux, deux faces latérales 4,5 comportant des ouvertures d'accès 6,7 à des bornes de raccordement 8,9, et une face avant 10 comportant les ouvertures d'accès 11,12 aux organes d'actionnement (du type à vis, non représentés) desdites bornes 8,9. Le rail de fixation R est du type en oméga et comporte deux bords longitudinaux 13,14 pliés en équerre. La face arrière 1 de l'appareil D comporte un évidement 15 destiné à recevoir le rail R, et en particulier les bords longitudinaux 13,14 du rail R. L'appareil D est retenu sur le rail R au moyen d'une part, d'un bec d'accrochage 16 prévu sur le boîtier B de l'appareil D au niveau de l'un des bords longitudinaux 13 du rail R, et d'autre part, par un dispositif de fixation F conforme à l'invention.

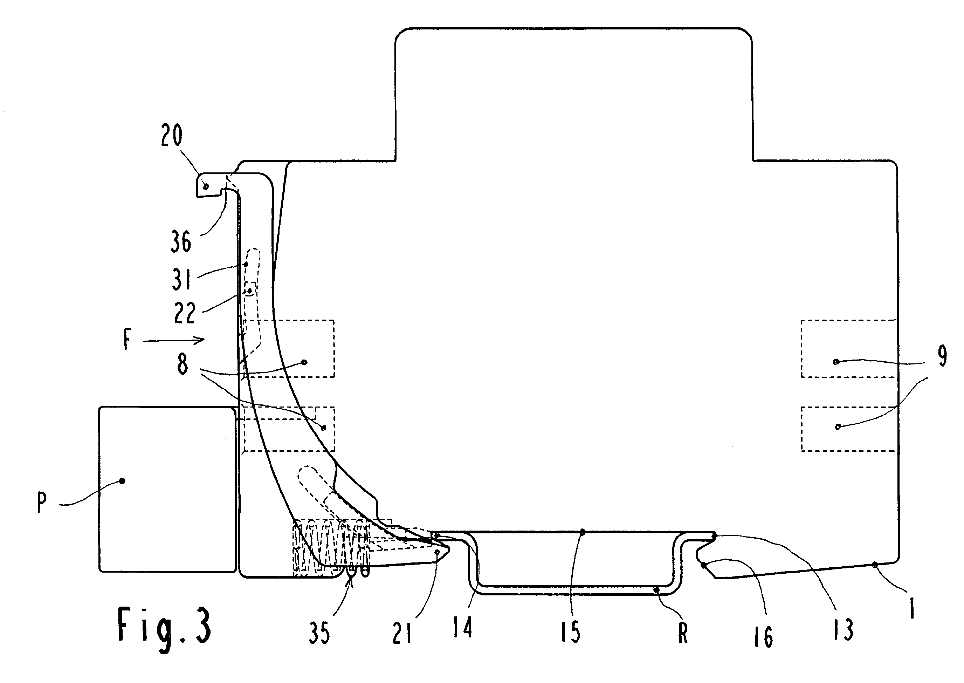

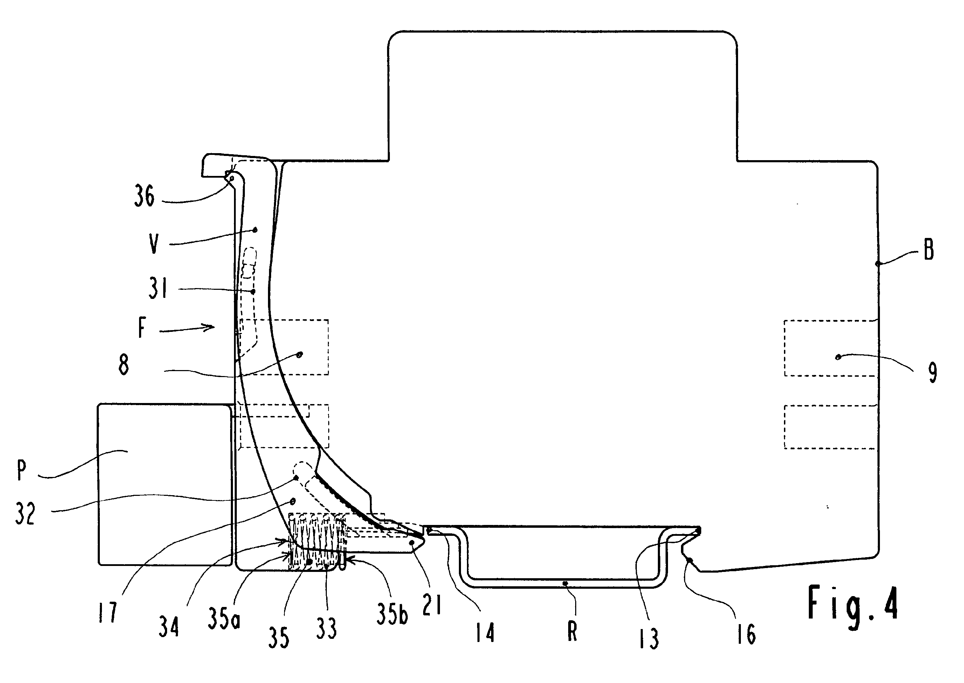

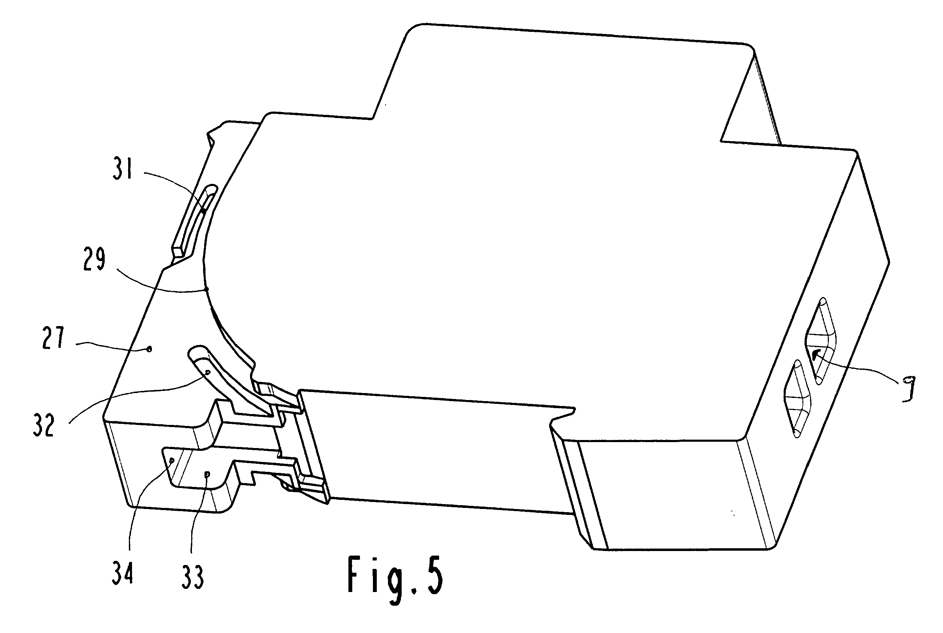

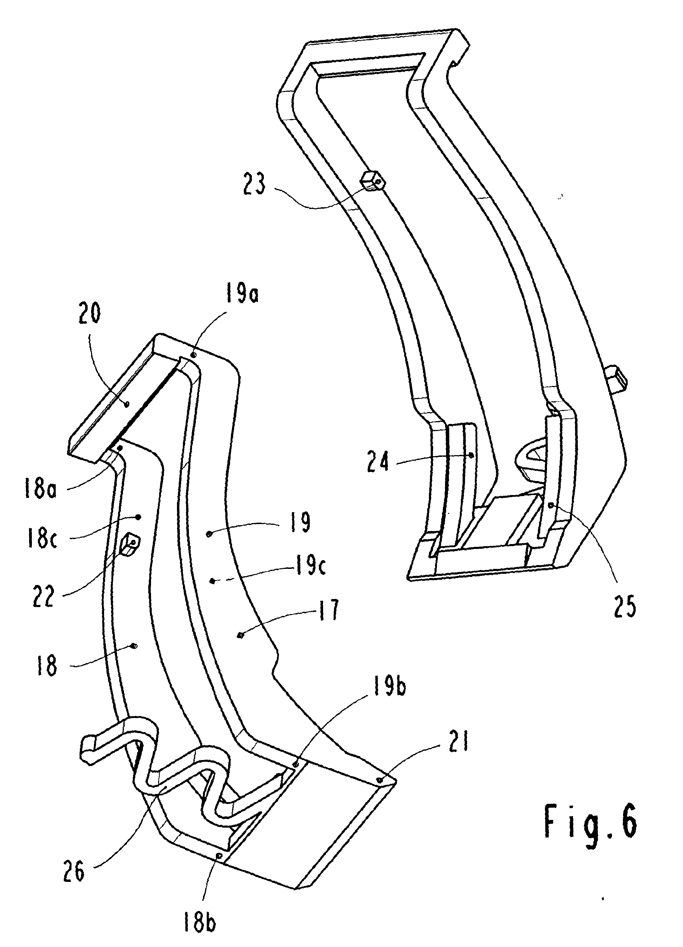

Ce dispositif de fixation F comporte un verrou V, ledit verrou V comprenant un coulisseau 17 de forme arquée, monté coulissant sur le boîtier B de l'appareil suivant une trajectoire arquée. Comme on le voit en particulier sur les figures 1 et 6, ce coulisseau 17 comporte deux branches 18,19 parallèles entre elles, reliées à l'une 18a,19a de leurs extrémités, par une partie 20 formant une anse de préhension et à leur extrémité opposée 18b,19b, par une partie 21 formant un bec d'accrochage, ledit bec 21 étant orienté du côté opposé à celui de l'anse de préhension 20. On voit également sur la figure 6, que les deux branches 18,19 du coulisseau 17 comprennent sur leur face interne 18c,19c respectivement deux ergots en regard 22,23 situés au voisinage de l'anse de préhension 20 et deux ergots en regard 24,25(non représentés) situés au voisinage du bec d'accrochage 21. Dans la réalisation illustrée sur la figure 6, correspondant à une version monostable du verrou, le coulisseau 17 comporte également un ressort intégré 26, venu de matière avec le coulisseau 17 et s'étendant à partir de la partie arrière du bec d'accrochage 21 sensiblement parallèlement à ladite anse de préhension 20. Ce verrou V est destiné à être monté autour du boîtier de l'appareil, à l'une des extrémités de celui-ci (figure 1). A cet effet, le boîtier comporte à cette extrémité (fig.2 et 5), deux dégagements de matière 27,28 prévus respectivement sur les faces principales, et formant deux parois de forme arquée, lesdites parois 29,30 formant des faces de guidage coopérant avec les branches 18,19 du verrou pour guider celui-ci en translation suivant une trajectoire de forme arquée. Ce guidage en translation est également assuré par deux rainures 31,32 prévues sur chaque face principale 2,3 du boîtier et présentant un même rayon de courbure, lesdites rainures 31,32 étant destinées à recevoir à coulissement respectivement les quatre ergots précités 22 à 25 solidaires du verrou V. En outre, un évidement 33 est prévu à la partie inférieure du boîtier pour recevoir un ressort tel que le ressort 26 décrit précédemment, ce ressort étant destiné à venir en appui contre une paroi de fond 34 du boîtier délimitant l'évidement précité 33. Dans la version décrite sur les figures 3 et 4 correspondant à une version bistable du verrou, le ressort 35 est une pièce indépendante, et est en appui par l'une de ses extrémités 35a, sur la paroi de fond précitée 34 de l'évidement 33, et par son extrémité opposée 35b, sur le coulisseau 17. Comme on le voit également sur ces figures 1 à 5, ce dispositif comporte, prévus en partie sur le boîtier B et en partie sur le verrou V, au niveau de la face inférieure de son anse de préhension 20, des moyens d'accrochage 36, ces moyens étant destinés à retenir le verrou dans sa position de déverrouillage.

Le fonctionnement du dispositif va être décrit brièvement dans ce qui suit en référence aux figures :

Sur les figures 1,2 et 3, le dispositif F est dans une position verrouillée, c'est à dire que le bec d'accrochage 21 du verrou V est engagé sur le bord longitudinal 14 du rail R de manière à retenir fermement l'appareil D sur le rail R. Les bornes de raccordement 8 de l'appareil D situées du côté du dispositif de fixation F sont raccordées électriquement à un peigne de raccordement P. Le verrou V est retenu dans cette position verrouillée par l'action du ressort 35 exerçant une pression sur le coulisseau 17. Lorsqu'il est nécessaire de démonter un appareil, une traction est exercée sur le verrou V par l'intermédiaire de l'anse de préhension 20 de manière à faire coulisser ledit verrou vers l'avant de l'appareil à l'encontre de la force de rappel du ressort 35. Il résulte de cette action que le bec d'accrochage 21 se désengage du rail R permettant ainsi audit appareil d'être retiré par rotation de l'appareil autour du bord longitudinal 13 du rail R opposé à celui coopérant avec le verrou V. Conformément à la réalisation décrite sur les figures 3 et 4, le dispositif peut être maintenu dans cette position déverrouillée en amenant l'anse de préhension 20 à venir s'accrocher sur le boîtier B grâce aux moyens d'accrochage précités 36. Les moyens d'accrochage 36 réalisent ainsi la fonction bistable du dispositif.

Avantageusement, ces appareils pourront être réalisés selon la version monostable avec la fonction ressort intégrée 26 sur les appareils unipolaires et selon la version bistable avec un ressort métallique additionnel 35 sur les appareils multipolaires.

On a donc réalisé grâce à l'invention, un dispositif de fixation permettant de démonter très aisément un appareil particulier, dans le cas où les appareils sont alimentés par un peigne de distribution électrique, ceci sans outil, par simple action manuelle sur sa anse et ce, sans interrompre la distribution du courant aux autres appareils du tableau.

Le montage du verrou s'effectue par l'extérieur de l'appareil, en fin de chaîne sur les pôles choisis, ce qui permet une différentiation retardée.

Bien que la précédente description décrive des appareils de fixation équipés d'un seul dispositif de fixation selon l'invention, l'invention couvre également le cas où l'appareil est équipé de deux dispositifs de fixation, le second dispositif remplaçant le bec d'accrochage du rail prévu sur le boîtier de l'appareil.

En outre, l'anse de préhension ramenée au niveau du plastron de coffret constitue un voyant visuel permettant de distinguer la position verrouillée ou déverrouillée, dans le cas de la version bistable de ce verrou.

Cette conception du verrou est relativement simple, en particulier dans le cas de la version monostable avec ressort intégré pour laquelle une seule pièce est mise en oeuvre.

Bien entendu, l'invention n'est pas limitée aux modes de réalisation décrits et illustrés qui n'ont été donnés qu'à titre d'exemples.

## Revendications

1. Dispositif de fixation amovible d'un appareil électrique (D) sur un rail de montage (R), ledit appareil (D) étant loge dans un boîtier (B) comportant une face arrière (1) de fixation au rail (R), une face avant (10) opposée à la précédente, deux faces principales (2, 3) et deux faces latérales (4, 5) comportant des bornes de raccordement (8, 9), ledit dispositif comprenant un verrou (V) comprenant un coulisseau (17) monté mobile par rapport au boîtier (B) de l'appareil (D) entre une première position dite de verrouillage dans laquelle le coulisseau (17) est engagé avec le rail (R) de manière à assurer la fixation amovible de l'appareil (D) sur le rail (R) et une seconde position, dite de déverrouillage, dans laquelle le verrou (V) est désengagé du rail (R) de manière à autoriser le retrait de l'appareil (D), ledit coulisseau (17) comprenant une partie d'engagement (21) avec le rail (R), une partie de manoeuvre (20) et des moyens élastiques (26) pour le maintien dudit coulisseau (17) dans la première position précitée, lesdits moyens élastiques (26) autorisant le déplacement du coulisseau (17) vers la seconde position sous l'actionnement de la partie de manoeuvre (20),
**caractérisé en ce que** le coulisseau précité (17) est monté coulissant par rapport au boîtier B de l'appareil D suivant une trajectoire arquée entre les deux positions précitées et comporte une première extrémité coopérant avec le rail R et une seconde extrémité comportant la partie de manoeuvre précitée (20), ladite partie de manoeuvre (20) étant ramenée au voisinage de la face avant (10) de l'appareil D de manière à permettre le raccordement des bornes (8,9) de l'appareil D à un peigne de raccordement P.

2. Dispositif selon la revendication 1, **caractérisé en ce que** le boîtier B de l'appareil comporte au moins une rainure (31,32) de forme arquée apte à coopérer avec au moins un ergot (22 à 25) prévu sur le coulisseau (17).

3. Dispositif selon la revendication 1 ou 2, **caractérisé en ce que** le coulisseau (17) est de forme arquée et comporte deux branches (18,19) réunies à l'une (18a,19a) de leurs extrémités, dite première, par une partie formant une anse de préhension (20), et à leur extrémité opposée (18b,19b), par une partie formant un bec d'accrochage (21).

4. Dispositif selon la revendication 3, **caractérisé en ce que** les deux branches (18,19) comportent sur leurs faces internes (18c,19c) des ergots (22 à 25) aptes à coopérer avec les rainures précitées (31,32), lesquelles rainures sont prévues sur les faces principales (2,3) du boîtier.

5. Dispositif selon la revendication 3 ou 4, **caractérisé en ce que** les deux branches (18,19) comportent deux ergots (22,23) en regard prévus au voisinage de l'anse de préhension (20), et deux ergots en regard (24,25) prévus au voisinage du bec d'accrochage (21), lesdits ergots (22 à 25) étant destinés à coopérer avec des rainures (31,32) du boîtier B prévues en regard desdits ergots (22 à 25).

6. Dispositif selon l'une quelconque des revendications 2 à 5, **caractérisé en ce que** les deux faces principales (2,3) du boîtier comprennent respectivement deux dégagements de matières (27,28), et **en ce que** les rainures précitées (31,32) sont prévues à l'intérieur de ces dégagements de matière.

7. Dispositif selon l'une quelconque des revendications précédentes, **caractérisé en ce que** le verrou V étant du type monostable, ledit ressort (26) forme partie intégrante du coulisseau (17).

8. Dispositif selon l'une quelconque des revendications 1 à 6, **caractérisé en ce que**, le verrou V étant du type bistable, le dispositif D comporte des moyens d'accrochage (36) de l'anse (20) sur le boîtier B de l'appareil D en position déverrouillée du verrou V, lesdits moyens assurant la fonction bistable du verrou.

9. Appareil électrique, **caractérisé en ce qu'**il est équipé d'un dispositif de fixation F selon l'une quelconque des revendications précédentes.

10. Appareil électrique logé dans un boîtier comprenant une face arrière (1 ) de fixation à un rail R, une face avant (10) comportant des organes de manoeuvre de l'appareil D, deux faces principales (2,3) et deux faces latérales (4,5) comportant des bornes de raccordement (8,9), **caractérisé en ce que** son boîtier B comporte des moyens (31,32) aptes à permettre le coulissement suivant une trajectoire arquée d'un verrou V de forme arquée monté sur ledit boîtier B.

11. Appareil électrique selon la revendication 10, **caractérisé en ce qu'**il comporte, sur chacune des deux faces principales (2,3) de son boîtier B, deux rainures (31,32) de forme arquée de même rayon de courbure et disposées respectivement au voisinage de la face avant (10) et au voisinage de la face arrière (1) de l'appareil D.

12. Appareil électrique selon la revendication 11, **caractérisé en ce que** c'est un disjoncteur D.

## Claims

1. A device for removable fixing of an electrical apparatus (D) on a mounting rail (R), said apparatus (D) being housed in a case (B) comprising a rear panel (1) for fixing to the rail (R), a front panel (10) opposite the above-mentioned panel, two main panels (2,3) and two side panels (4,5) comprising connection terminals (8,9), said device comprising a latch (V) comprising a slide member (17) mounted mobile with respect to the case (B) of the apparatus (D) between a first position called latched position wherein the slide member (17) is engaged with the rail (R) so as to achieve removable fixing of the apparatus (D) on the rail (R), and a second position called unlatched position wherein the latch (V) is disengaged from the rail (R) so as to enable the apparatus (D) to be removed, said slide member (17) comprising a part (21) for engagement with the rail (R), an actuating part (20) and flexible means (26) to secure said slide member (17) in the above-mentioned first position, said flexible means (26) enabling the slide member (17) to be moved to the second position by actuation of the actuating part (20),
**characterized in that** the above-mentioned slide member (17) is mounted sliding with respect to the case (B) of the apparatus (D) along a curved trajectory between the two above-mentioned positions and comprises a first end operating in conjunction with the rail (R) and a second end comprising the above-mentioned actuating part (20), said actuating part (20) being located near to the front panel (10) of the apparatus (D) so as to enable the terminals (8,9) of the apparatus (D) to be connected to a connecting comb (P).

2. The device according to claim 1, **characterized in that** the case (B) of the apparatus comprises at least one groove (31,32) of curved shape able to operate in conjunction with at least one pin (22 to 25) provided on the slide member (17).

3. The device according to claim 1 or 2, **characterized in that** the slide member (17) is of curved shape and comprises two branches (18,19) joined at one (18a,19a) of their ends, called first end, by a part forming a gripping handle (20), and at their opposite end (18b,19b) by a part forming a latching lip (21).

4. The device according to claim 3, **characterized in that** the two branches (18,19) comprise pins (22 to 25) on their internal faces (18c,19c), designed to operate in conjunction with the above-mentioned grooves (31,32), which grooves are provided on the main panels (2,3) of the case.

5. The device according to claim 3 or 4, **characterized in that** the two branches (18,19) comprise two facing pins (22,23) provided near to the gripping handle (20), and two facing pins (24,25) provided near to the latching lip (21), said pins (22 to 25) being designed to operate in conjunction with grooves (31,32) of the case (B) provided facing said pins (22 to 25).

6. The device according to any one of the claims 2 to 5, **characterized in that** the two main panels (2,3) of the case respectively comprise two withdrawn areas (27,28), and **in that** the above-mentioned grooves (31,32) are provided inside these withdrawn areas.

7. The device according to any one of the foregoing claims, **characterized in that** the latch (V) being of monostable type, said spring (26) forms an integral part of the slide member (17).

8. The device according to any one of the claims 1 to 6, **characterized in that**, the latch (V) being of bistable type, the device (D) comprises means (36) for latching the handle (20) onto the case (B) of the apparatus (D) in the unlatched position of the latch (V), said means performing the bistable function of the latch.

9. An electrical apparatus, **characterized in that** it is equipped with a fixing device (F) according to any one of the foregoing claims.

10. An electrical apparatus housed in a case comprising a rear panel (1) for fixing to a rail (R), a front panel (10) comprising actuating means of the apparatus (D), two main panels (2,3) and two side panels (4,5) comprising connection terminals (8,9), **characterized in that** its case (B) comprises means (31,32) designed to enable sliding along a curved trajectory of a latch (V) of curved shape fitted on said case (B).

11. The electrical apparatus according to claim 10, **characterized in that**, on each of the two main panels (2,3) of its case (B), it comprises two grooves (31,32) of curved shape both having the same radius of curvature and arranged respectively near to the front panel (10) and near to the rear panel (1) of the apparatus (D).

12. The electrical apparatus according to claim 11, **characterized in that** it is a circuit breaker (D).

## Patentansprüche

1. Bewegbare Befestigungsvorrichtung zur Befestigung eines elektrischen Schaltgeräts (D) auf einer Tragschiene (R), welches Schaltgerät (D) in einem Gehäuse (B) mit einer Rückseite (1) zur Befestigung auf der Tragschiene (R), eine dieser Rückseite gegenüber liegenden Vorderseite (10), zwei Hauptseiten (2, 3) sowie zwei Seitenflächen (4, 5) mit darin angeordneten Anschlussklemmen (8, 9) angeordnet ist, welche Vorrichtung einen Riegel (V) mit einem Schieber (17) umfasst, der zwischen einer als Verriegelungsstellung bezeichneten ersten Stellung, in der der Schieber (17) in Eingriff mit der Tragschiene (R) steht und so die lösbare Befestigung des Schaltgeräts (D) auf der Tragschiene (R) gewährleistet, und einer als Entriegelungsstellung bezeichneten zweiten Stellung relativ zum Gehäuse (B) des Schaltgeräts (D) verschoben werden kann, in welcher zweiten Stellung der Riegel (V) nicht in Eingriff mit der Tragschiene (R) steht und so den Ausbau des Schaltgeräts (D) erlaubt, wobei der genannte Schieber (17) einen Eingriffsbereich (21) zum Zusammenwirken mit der Tragschiene (R), einen Betätigungsbereich (20) sowie Federmittel (26) zum Halten des genannten Schiebers (17) in der genannten ersten Stellung umfasst, welche Federmittel (26) durch Einwirkung auf den Betätigungsbereich (20) ein Verschieben des Schiebers (17) in die zweite Stellung erlauben,
**dadurch gekennzeichnet, dass** der genannte Schieber (17) auf einer bogenförmigen Bahn zwischen den beiden genannten Stellungen relativ zum Gehäuse B des Schaltgeräts D verschoben werden kann und ein mit der Tragschiene R zusammenwirkendes erstes Ende sowie ein zweites Ende mit dem daran ausgebildeten genannten Betätigungsbereich (20) umfasst, welcher Betätigungsbereich (20) in der Nähe der Vorderseite (10) des Schaltgeräts D angeordnet ist, derart dass die Klemmen (8, 9) des Schaltgeräts D an eine Kammschiene P angeschlossen werden können.

2. Vorrichtung nach Anspruch 1, **dadurch gekennzeichnet, dass** mindestens eine bogenförmige Nut (31, 32) im Gehäuse B ausgebildet ist, die dazu dient, mit mindestens einem am Schieber (17) ausgebildeten Zapfen (22 bis 25) zusammenzuwirken.

3. Vorrichtung nach Anspruch 1 oder 2, **dadurch gekennzeichnet, dass** der Schieber (17) bogenförmig ausgebildet ist und zwei Schenkel (18, 19) umfasst, die an einem als erstes Ende bezeichneten Ende (18a, 19a) über einen als Griffelement (20) ausgebildeten Abschnitt und an ihrem gegenüberliegenden Ende (18b,19b) über einen als Rastnase (21) ausgebildeten Abschnitt miteinander verbunden sind.

4. Vorrichtung nach Anspruch 3, **dadurch gekennzeichnet, dass** auf den Innenseiten (18c, 19c) der beiden Schenkel (18, 19) Zapfen (22 bis 25) ausgebildet sind, die dazu dienen, mit den genannten Nuten (31, 32) zusammenzuwirken, welche Nuten in den Hauptseiten (2, 3) des Gehäuses ausgebildet sind.

5. Vorrichtung nach Anspruch 3 oder 4, **dadurch gekennzeichnet, dass** in den beiden Schenkeln (18, 19) zwei einander gegenüberliegende Zapfen (22, 23) im Bereich des Griffelements (20) und zwei einander gegenüberliegende Zapfen (24, 25) im Bereich der Rastnase (21) ausgebildet sind, welche Zapfen (22 bis 25) dazu dienen, mit den im Gehäuse B gegenüber den genannten Zapfen (22 bis 25) ausgebildeten Nuten (31, 32) zusammenzuwirken.

6. Vorrichtung nach irgendeinem der Ansprüche 2 bis 5, **dadurch gekennzeichnet, dass** in den beiden Hauptseiten (2, 3) des Gehäuses jeweils eine Ausnehmung (27, 28) ausgebildet ist und dass die genannten Nuten (31, 32) innerhalb dieser Ausnehmungen ausgebildet sind.

7. Vorrichtung nach irgendeinem der vorhergehenden Ansprüche, **dadurch gekennzeichnet, dass** der Riegel V als monostabiler Riegel ausführt und die genannte Feder (26) einstückig mit dem Schieber (17) ausgebildet ist.

8. Vorrichtung nach irgendeinem der Ansprüche 1 bis 6, **dadurch gekennzeichnet, dass** der Riegel V als bistabiler Riegel ausgebildet ist und die Vorrichtung D Rastmittel (36) umfasst, die dazu dienen, das Griffelement (20) in der Entriegelungsstellung des Riegels V am Gehäuse 13 des Schaltgeräts D zu verrasten, wobei die genannten Mittel die bistabile Funktion des Riegels gewährleisten.

9. Elektrisches Schaltgerät, **dadurch gekennzeichnet, dass** es mit einer Befestigungsvorrichtung F nach irgendeinem der vorhergehenden Ansprüche ausgerüstet ist.

10. Elektrisches Schaltgerät in einem Gehäuse mit einer Rückseite (1) zur Befestigung auf einer Tragschiene R, einer Vorderseite (10) mit Betätigungsorganen zur Betätigung des Schaltgeräts D, zwei Hauptseiten (2, 3) sowie zwei Seitenflächen (4, 5) mit darin ausgebildeten Anschlussklemmen (8, 9), **dadurch gekennzeichnet dass** das Gehäuse B Mittel (31, 32) umfasst, die eine Verschiebung eines am genannten Gehäuse B montierten bogenförmigen Riegels V auf einer bogenförmigen Bahn erlauben.

11. Elektrisches Schaltgerät nach Anspruch 10, **dadurch gekennzeichnet, dass** in jeder Hauptseite (2,3) des Gehäuses B, in der Nähe der Vorderseite (10) bzw. der Rückseite (1) des Schaltgeräts D jeweils zwei bogenförmige Nuten (31, 32) mit dem gleichen Krümmungsradius ausgebildet sind.

12. Elektrisches Schaltgerät nach Anspruch 11, **dadurch gekennzeichnet, dass** es sich um einen Leistungsschalter D handelt.
